# EUROPEAN PATENT SPECIFICATION

(11) **EP 4 463 991 B1**
(45) Date of publication and mention of the grant of the patent: **24.12.2025**
(21) Application number: 22748474.8
(22) Date of filing: 21.07.2022
(51) Int. Cl.: H04L 41/16, H04W 4/50

(54) **CONSUMER-CONTROLLABLE ML MODEL PROVISIONING IN A WIRELESS COMMUNICATION NETWORK**
VERBRAUCHERSTEUERBARE ML-MODELL-BEREITSTELLUNG IN EINEM DRAHTLOSEN KOMMUNIKATIONSNETZ
PROVISIONNEMENT DE MODÈLE ML COMMANDABLE PAR LE CONSOMMATEUR DANS UN RÉSEAU DE COMMUNICATION SANS FIL

(30) Priority: 13.01.2022 US 202263299145 P
(43) Date of publication of application: 20.11.2024
(73) Proprietor: Telefonaktiebolaget LM Ericsson (publ), 164 83 Stockholm (SE)
(72) Inventor: YUE, Jing, 182 30 Danderyd (SE); FU, Zhang, 120 78 Stockholm (SE); MATTSSON, Ulf, 434 36 Kungsbacka (SE); D'ANGELO, Mirko, 414 76 Göteborg (SE); PANCORBO MARCOS, Maria Belen, 28 035 Madrid (ES)
(74) Representative: Ericsson
(86) International application number: PCT/IB2022/056753
(87) International publication number: WO 2023/135457

(56) References cited:
- WO-A1-2021/213688
- WO-A1-2021/244763
- US-A1- 2020 050 951
- HUAWEI ET AL: "KI #19, Sol #56: Update to further clarify ML Model sharing between NWDAF instances", vol. SA WG2, no. e-meeting; 20201012 - 20201023, 2 October 2020 (2020-10-02), XP051938024, Retrieved from the Internet <URL:https://ftp.3gpp.org/tsg_sa/WG2_Arch/TSGS2_141e_Electronic/Docs/S2-2006919.zip S2-2006919 KI #9, Sol #56 Update.doc> [retrieved on 20201002]

## Description

### FIELD OF DISCLOSURE

The present disclosure relates generally to wireless communication networks, and in particular to methods for consumer control of Machine Learning model provisioning and training.

### BACKGROUND

Wireless communication networks, including network nodes and radio network devices such as cellphones and smartphones, are ubiquitous in many parts of the world. These networks continue to grow in capacity and sophistication. To accommodate both more users and a wider range of types of devices that may benefit from wireless communications, the technical standards governing the operation of wireless communication networks continue to evolve. The fourth generation of network standards (4G, also known as Long Term Evolution, or LTE) has been deployed, the fifth generation (5G, also known as New Radio, or NR) is in development or the early stages of deployment, and the sixth generation (6G) is being planned.

Release 15 (Rel-15) of the Third Generation Partnership Project (3GPP) standard for 5G networks introduced a new Network Function (NF) called the Network Data Analytics Function (NWDAF), the basic functionality of which is specified in Release 16 (Rel-16). Development of more advanced uses cases is ongoing for Release 17 (Rel-17). Generally, the NWDAF performs two types of analytics processing: statistical analytics and predictive analytics. Statistical analytics provide information about what is currently happening in the network (or has happened in the past). Predictive analytics provides information about what is likely to happen in the future, based on current and historical trends. In both cases, advanced NWDAFs rely on Machine Learning (ML) models to process large volumes of data, to produce statistical and/or predictive analytics. As known in the art, ML is an application of Artificial Intelligence (AI) that refers to computer systems having the ability to automatically learn and adapt without following explicit instructions, by using algorithms and statistical models to analyze and draw inferences from patterns in data - usually very voluminous datasets.

An Analytics Logical Function (AnLF) is a component of a NWDAF that performs data analytics and exposes the analytics service to other NFs. A Model Training Logical Function (MTLF) is a component that trains ML models for use in providing the analytics service and exposes the training service to other NFs. A NWDAF can include an AnLF, a MTLF, or both. A NWDAF with a MTLF can train the machine learning model used in providing an analytics service by another NWDAF with an AnLF.

One development in the field of ML modeling is distributed machine learning (DML). In DML, the ML model training process is carried out using distributed resources, which significantly accelerate the training speed and reduce the training time. *See, e.g.,* J. Liu, et al., "From distributed machine learning to federated learning: A survey." arXiv preprint arXiv:2104.14362v2, May 10, 2021. In the wireless network context, DML can relieve congestion by sending a limited amount of data to central servers for an ML training task, meanwhile protecting sensitive information, and preserving data privacy of the devices in the network.

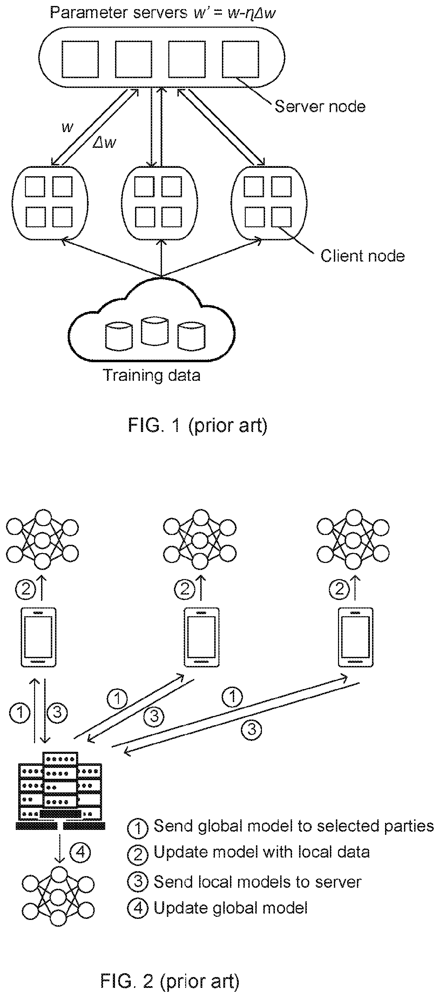

The Parameter Server (PS) framework is a key underlying architecture of centrally assisted DML. Figure 1 depicts a general model of the PS framework in DML. There are two types of nodes in a PS framework, *i.e.,* server and client (or worker). There may be one or multiple servers. The client nodes are partitioned into groups. The servers maintain all or part of ML model parameters, and aggregate the weights from each client group. The client nodes conduct the initial steps of a learning algorithm. Unlike a centralized approach, each client uses a synchronized global gradient from the server nodes to carry out ML training operations, such as back propagation and weight refreshments. The clients only share the ML model parameters with the servers, and never communicate with each other. The PS architecture has been broadly applied to decentralize ML tasks on wired platforms.

Academic studies on DML have been heavily focused on Federated Learning (FL), which is a popular architecture of DML for decentralized generation of generic ML models, its related technologies and protocols, and several application scenarios. See, *e.g.,* S. Hu, et al., "Distributed machine learning for wireless communication networks: Techniques, architectures, and applications." IEEE Communications Surveys & Tutorials, vol. 23, No. 3, Third Quarter 2021, and Q. Li, et al., "A survey of federated learning system: Vision, hype and reality for data privacy and protection." arXiv preprint arXiv:1907.09693v6, Jul. 1, 2021.

FL enables the collaborative training of ML models among different organizations under the privacy restrictions. The main idea of FL is to build ML models based on data sets that are distributed across multiple devices, while preventing data leakage. *See, e.g.,* Q. Yang, et al., "Federated machine learning: Concept and applications." arXiv preprint arXiv: 1902.04885v1, Feb. 13, 2019. In an FL system, multiple parties collaboratively train ML models without exchanging their raw data. The output of the system is an ML model for each party (which can be same or different).

There are three major components in an FL system: parties (*e.g*., clients), manager (*e.g.,* server), and communication-computation framework to train the ML model. The parties are the data owners and the beneficiaries of FL. The manager is typically a powerful central server, or one of the organizations, who dominates the FL process under different settings. Computation occurs at both the parties and the manager, and communication occurs between the parties and the manager. Usually, the aim of the computation is for the ML model training, and the aim of the communication is for exchanging the ML model parameters.

A widely used FL framework is Federated Averaging (FedAvg). *See, e.g.,* H. McMahan, et al., "Communication-efficient learning of deep networks from decentralized data." arXiv preprint arXiv:1602.05629, 2016. Figure 2 depicts the FedAvg model. Generally, in each iteration, the following processes occur:
1. The server first sends the current global model to the selected parties;
2. The selected parties update the global model using their local data;
3. The updated models are then sent back to the server; and
4. The server averages all the received local models, to generate a new global model.

This process repeats until reaching a specified number of iterations. The global ML model of the server is the final output.

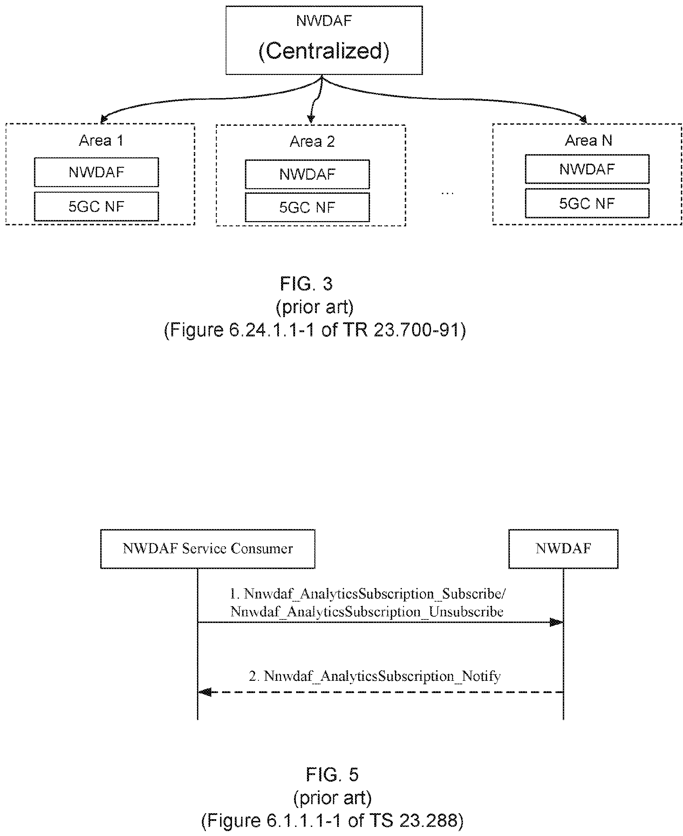

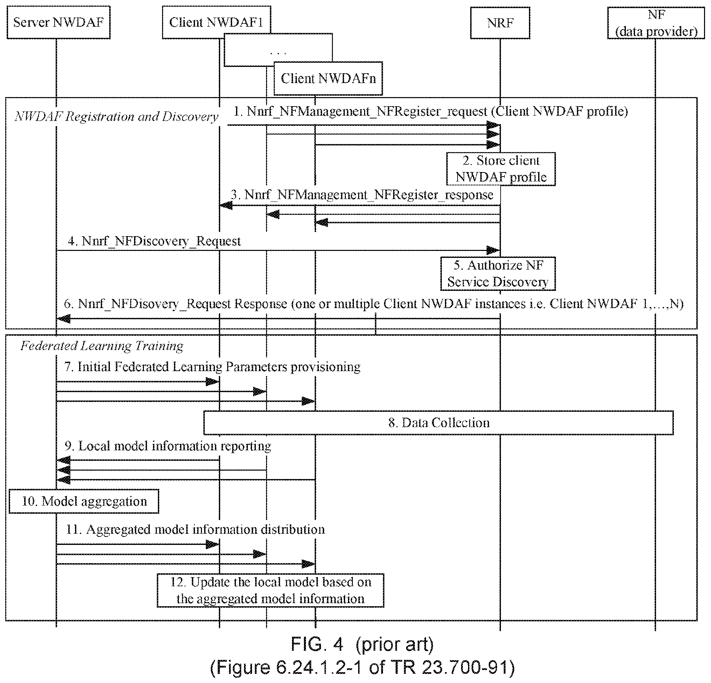

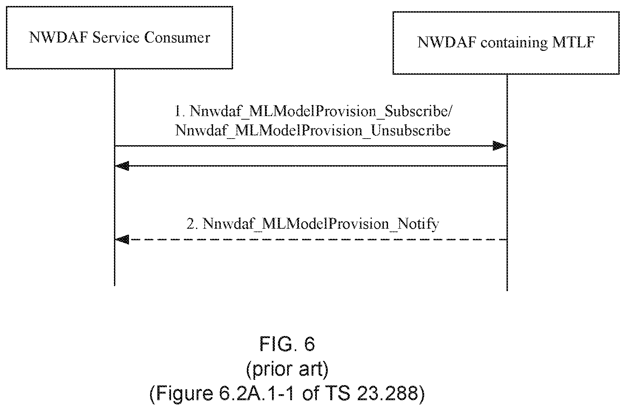

3GPP has considered this research, and proposed a standard for "Federated Learning among Multiple NWDAF Instances" in 3GPP Technical Report (TR) 23.700-91 v17.0.0, § 6.24, et. seq*.* In particular, this TR addresses previously identified key issues: Key Issue #2, "Multiple NWDAF instances," and Key Issue #19, "Trained data model sharing between multiple NWDAF instances." The above-cited 3GPP TR 23.700-91 is reproduced below. Note that the referenced Figure 6.24.1.1-1 is reproduced as Figure 3 in this disclosure, and Figure 6.24.1.1-2 is reproduced as Figure 4.

Document D1: HUAWEI ET AL: "KI #19, Sol #56: Update to further clarify ML Model sharing between NWDAF instances", 3GPP DRAFT; S2-2006919, 3RD GENERATION PARTNERSHIP PROJECT (83GPP), MOBILE COMPETENCE CENTRE; 650, ROUTE DES LUCIOLES ; F-06921 SOPHIA-ANTIPOLIS CEDEX ; FRANCE vol. SA WG2, no. e-meeting; 20201012 - 20201023 (2020-10-02), describes how solution #56 can be used in different scenarios of trained model sharing between NWDAF instances, wherein "Data Model" is replaced by "ML model" to make it clear that is a trained ML model for analytics inference, and wherein some further clarifications based on the comments received in eNA conference call, e.g., "Provider"/"Consumer" NWDAF is replaced by "Training"/"Inference".

US 2020/0050951A1 discloses a model requester node, which is an edge node of a cloud computing network, generates a specification of a machine learning model, distributes the specification to a plurality of other edge nodes, and receives replies to the specification from the plurality of other edge nodes. In response to the replies, the model requester node identifies a set of participating edge nodes based on a learning utility and a cost estimate of each of the plurality of other edge nodes. The model requester node then trains the machine learning model, without exchanging training data among the model requester node and the participating edge nodes, by repeatedly: distributing most recent parameters of the machine learning model to the participating edge nodes; receiving updates to the most recent parameters from the participating edge nodes; and establishing new parameters for the machine learning model by aggregating the updates from the participating edge nodes.

### 6.24 Solution #24: Federated Learning among Multiple NWDAF Instances

### 6.24.1 Description

This is a solution for the Key Issue#2: Multiple NWDAF instances and Key Issue #19: Trained data model sharing between multiple NWDAF instances.

### 6.24.1.1 General

As shown in Figure 6.24.1.1-1, multiple NWDAF will be deployed in a big PLMN, so maybe it is difficult for NWDAF to centralize all the raw data that are distributed in different Areas. However, it is desired or reasonable for the NWDAF distributed in an Area to share its model or data analytics with others NWDAFs.

Federated Learning (also called Federated Machine Learning) could be a possible solution to handle the issues such as data privacy and security, model training efficiency, and so on, in which there is no need for raw data transferring (*e.g*. centralized into single NWDAF) but only need for model sharing. For example, with multiple level NWDAF architecture, NWDAFs may be co-located with an 5GC NF (*e.g.* UPF, SMF), and the raw data cannot be exposed due to privacy concerns and performance reasons. In such case, the federated learning will be a good way to let a Server NWDAF coordinate with multiple localized NWDAFs to complete a machine learning.

The main idea of Federated Learning is to build machine-learning models based on data sets that are distributed in different network functions. A Client NWDAF (e.g. deployed in a domain or network function) locally trains the local ML model with its own data and share it to the server NWDAF. With local ML models from different Client NWDAFs, the Server NWDAF could aggregate them into a global or optimal ML model or ML model parameters and send them back to the Client NWDAFs for inference.

This solution tries to involve the idea of Federated Learning into the NWDAF-based architecture, which aims to investigate the following aspects:
- Registration and discovery of multiple NWDAF instances that support Federated Learning;
- How to share the ML models or ML model parameters during the Federated Learning training procedure among multiple NWDAF instances.

1-3. Client NWDAF registers its NF profile (Client NWDAF Type (see TS 23.502 [3] clause 5.2.7.2.2), Address of Client NWDAF, Support of Federated Learning capability information, Analytics ID(s)) into NRF.

4-6. Server NWDAF discovers one or multiple Client NWDAF instances which could be used for Federated Learning via the NRF to get IP addresses of Client NWDAF instances by invoking the Nnrf_NFDiscovery_Request (Analytics ID, Support of Federated Learning capability information) service operation.

It is assumed an Analytics Id is preconfigured for a type of Federated Learning. Thus, the NRF can realize the Server NWDAF is requesting to perform federated learning based on the pre-configuration. And the NRF responds to the central NWDAF the IP address of multiple NWDAF instances which support the Analytics Id.

NOTE 1 : The analytic ID(s) supporting Federated Learning can be configured by operator.

7a: Each client NWDAF communicates licensing conditions for its data and training infrastructure to participate in the federated learning task. These conditions can be based on policies set-up based on how sensitive the data is, how much compute is expected to be needed to perform local training, who will get the use the trained model, *etc.*

7b: Based on the response from NRF, Server NWDAF selects which NWDAF clients will participate based on its desired license model.

7c. Server NWDAF sends a request to the selected Client NWDAFs that participate in the Federated learning according to steps 7a and 7b including some parameters (such as initial ML model, data type list, maximum response time window, *etc.*) to help the local model training for Federated Learning.

8. Each Client NWDAF collects its local data by using the current mechanism in clause 6.2, TS 23.288 [5].

9. During Federated Learning training procedure, each Client NWDAF further trains the retrieved ML model from the server NWDAF based on its own data, and reports the results of ML model training to the Server NWDAF, *e.g.* the gradiente.

NOTE 2: Server NWDAF interacts with Client NWDAF to deliver and update the ML model, and how to transfer the ML model and local ML model training results are up to the conclusion of KI#19.

10. The Server NWDAF aggregates all the local ML model training results retrieved at step 9 such as the gradient to update the global ML model.

11. The Server NWDAF sends the aggregated ML model information (updated ML model) to each Client NWDAF for next ground model training.

12. Each Client NWDAF updates its own ML model based on the aggregated model information (updated ML model) distributed by the Server NWDAF at step 11.

NOTE 3: The steps 8-12 should be repeated until the training termination condition (*e.g.* maximum number of iterations, or the result of loss function is lower than a threshold) is reached.

After the training procedure is finished, the globally optimal ML model or ML model parameters could be distributed to the Client NWDAFs for the inference.

3GPP Technical Standard (TS) 23.288 v17.2.0 § 6.1 *et seq.* specifies analytics service provided by NWDAFs exposure to NWDAF service consumer. This TS is reproduced below. Note that the referenced Figure 6.1.1.1-1 is reproduced as Figure 5 in this disclosure.

### 6.1 Procedures for analytics exposure

### 6.1.1 Analytics Subscribe/Unsubscribe

### 6.1.1.1 Analytics subscribe/unsubscribe by NWDAF service consumer

This procedure is used by any NWDAF service consumer (*e.g*. including NFs/OAM) to subscribe/unsubscribe at NWDAF to be notified on analytics information, using Nnwdaf_AnalyticsSubscription service defined in clause 7.2. This service is also used by an NWDAF service consumer to modify existing analytics subscription(s). Any entity can consume this service as defined in clause 7.2.
1. The NWDAF service consumer subscribes to or cancels subscription to analytics information by invoking the Nnwdaf_AnalyticsSubscription_Subscribe/ Nnwdaf_AnalyticsSubscription_Unsubscribe service operation. The parameters that can be provided by the NWDAF service consumer are listed in clause 6.1.3.
   When a subscription to analytics information is received, the NWDAF determines whether triggering new data collection is needed.
   If the service invocation is for a subscription modification, the NF service consumer includes an identifier (Subscription Correlation ID) to be modified in the invocation of Nnwdaf_AnalyticsSubscription_Subscribe.
2. If NWDAF service consumer is subscribed to analytics information, the NWDAF notifies the NWDAF service consumer with the analytics information by invoking Nnwdaf_AnalyticsSubscription_Notify service operation, based on the request from the NWDAF service consumer, *e.g.* Analytics Reporting Parameters. Termination Request. If the NWDAF provides a Termination Request, then the consumer cancels subscription to analytics information by invoking the Nnwdaf_AnalyticsSubscription_Unsubscribe service operation.
   3GPP TS 23.288 v17.2.0 § 6.2A *et seq.* specifies ML model provisioning from NWDAF (containing MTLF) to NWDAF service consumer. This TS is reproduced below. Note that the referenced Figure 6.2A.1-1 is reproduced as Figure 6 in this disclosure.

### 6.2A Procedure for ML Model Provisioning

### 6.2A.0 General

This clause presents the procedure for the ML Model provisioning.

In this Release of the specification an NWDAF containing AnLF is locally configured with (a set of) NWDAF (MTLF) ID(s) and the Analytics ID(s) supported by each NWDAF containing MTLF to retrieve trained ML models. An NWDAF containing AnLF may use NWDAF discovery for NWDAF(MTLF) within the set of configured NWDAF (MTLF) ID(s), if necessary. An NWDAF containing MTLF may determine that further training for an existing ML model is needed when it receives the ML model subscription or the ML model request. NOTE: ML Model provisioning/sharing between multiple NWDAF (MTLF)(s) is not specified in this Release of the specification.

### 6.2A.1 ML Model Subscribe/Unsubscribe

The procedure in Figure 6.2A.1-1 is used by an NWDAF service consumer, *i.e.* an NWDAF (AnLF) to subscribe/unsubscribe at another NWDAF, *i.e.* an NWDAF containing MTLF, to be notified when ML model information on the related Analytics becomes available, using Nnwdaf_MLModelProvision services as defined in clause 7.5. The ML model information is used by an NWDAF containing AnLF to derive analytics. The service is also used by an NWDAF to modify existing ML Model Subscription(s). An NWDAF can be at the same time a consumer of this service provided by other NWDAF(s) and a provider of this service to other NWDAF(s).
1. The NWDAF service consumer (*i.e.* an NWDAF (AnLF)) subscribes to, modifies, or cancels subscription for a (set of) trained ML Model(s) associated with a (set of) Analytics ID(s) by invoking the Nnwdaf_MLModelProvision_Subscribe / Nnwdaf_MLModelProvision_Unsubscribe service operation. The parameters that can be provided by the NWDAF service consumer are listed in clause 6.2A.2.
   When a subscription for a trained ML model associated with an Analytics ID is received, the NWDAF containing MTLF may:
      - determine whether an existing trained ML Model can be used for the subscription; or
      - determine whether triggering further training for an existing trained ML models is needed for the subscription.
   If the NWDAF containing MTLF determines that further training is needed, this NWDAF may initiate data collection from NFs, (*e.g*. AMF/DCCF/ADRF), UE Application (via AF) or OAM as described in clause 6.2, to generate the ML model.
   If the service invocation is for a subscription modification or subscription cancelation, the NWDAF service consumer includes an identifier (Subscription Correlation ID) to be modified in the invocation of Nnwdaf_MLModelProvision_Subscribe.
2. If the NWDAF service consumer subscribes to a (set of) trained ML model(s) associated to a (set of) Analytics ID(s), the NWDAF containing MTLF notifies the NWDAF service consumer with the trained ML model information (containing a (set of) file address of the trained ML model) by invoking Nnwdaf_MLModelProvision_Notify service operation. The content of trained ML model information that can be provided by the NWDAF containing MTLF is specified in clause 6.2A.2.
   The NWDAF containing MTLF also invokes the Nnwdaf_MLModelProvision_Notify service operation to notify an available re-trained ML model when the NWDAF containing MTLF determines that the previously provided trained ML Model required re-training at step 1.
   When the step 1 is for a subscription modification (*i.e.,* including Subscription Correlation ID), the NWDAF containing MTLF may provide either a new trained ML model different to the previously provided one, or re-trained ML model by invoking Nnwdaf_MLModelProvision_Notify service operation.

### 6.2A.2 Contents of ML Model Provisioning

The consumers of the ML model provisioning services (*i.e.* an AnLF of NWDAF) as described in clause 7.5 and clause 7.6 may provide the input parameters as listed below:
- Information of the analytics for which the requested ML model is to be used, including:
   - A list of Analytics ID(s): identifies the analytics for which the ML model is used.
   - [OPTIONAL] ML model Filter Information: enables to select which ML model for the analytics is requested, *e.g*. S-NSSAI, Area of Interest. Parameter types in the ML Model filter information are the same as parameter types in the Analytics Filter Information which are defined in procedures.
   - [OPTIONAL] Target of Analytics Reporting: indicates the object(s) for which ML model for the analytics is requested, entities such as specific UEs, a group of UE(s) or any UE (*i.e.* all UEs).
   - [OPTIONAL] ML Model target period: indicates time interval [start, end] for which ML model for the Analytics is requested. The time interval is expressed with actual start time and actual end time (*e.g.* via UTC time).
   - A Notification Target Address (+ Notification Correlation ID) as defined in TS 23.502 [3] clause 4.15.1, allowing to correlate notifications received from the ML model provider NWDAF with this subscription.

The ML model provider NWDAF (*i.e.* an MTLF of NWDAF) provides to the consumer of the ML model provisioning service operations as described in clause 7.5 and 7.6, the output information as listed below:
- (Only for Nnwdaf_MLModelProvision_Notify) The Notification Correlation Information.
- ML model information, which includes the ML model file address (*e.g*. URL or FQDN) for the Analytics ID(s).
- [OPTIONAL] Validity period: indicates time period when the provided ML model information applies.
- [OPTIONAL] Spatial validity: indicates Area where the provided ML model information applies.

NOTE: Spatial validity and Validity period are determined by MTLF internal logic and it is a subset of AoI if provided in ML model Filter information and of ML Model target period, respectively.

In the solution given in TR 23.700-91 for FL among multiple NWDAF instances (*i.e.,* Solution #24), the FL processes cannot be controlled by the consumer. Furthermore, generally the consumer cannot really control the model provisioning process or the training/learning processes. For example, the consumer has no idea if the model is trained online or offline, the type of data used, which training types are used (*e.g.,* FL, reinforcement learning, *etc.*)*.* However, in many practical applications, consumers require control of the processes of model provisioning in 5GC. For example, the Mobile Network Operator (MNO) may want to train a global model via the NWDAFs in different regions using DML/FL; in this case, the MNO is responsible for providing the instructions of model training and controlling the process of training. In addition, interaction between consumer and NWDAF during training/learning processes is necessary for NWDAF to make adjustments according to changes in requirements from the consumer. The current solution provided in TR 23.700-91 cannot support such use cases.

The Background section of this document is provided to place aspects of the present disclosure in technological and operational context, to assist those of skill in the art in understanding their scope and utility. Approaches described in the Background section could be pursued, but are not necessarily approaches that have been previously conceived or pursued. Unless explicitly identified as such, no statement herein is admitted to be prior art merely by its inclusion in the Background section.

### SUMMARY

The subject-matter of the invention is disclosed in the appended claims.

### BRIEF DESCRIPTION OF THE DRAWINGS

The present disclosure will now be described more fully hereinafter with reference to the accompanying drawings, in which aspects of the disclosure are shown. However, this disclosure should not be construed as limited to the aspects set forth herein. Rather, these aspects are provided so that this disclosure will be thorough and complete, and will fully convey the scope of the disclosure to those skilled in the art. Like numbers refer to like elements throughout.
Figure 1 is a diagram of prior art Distributed Model Learning (DML).
Figure 2 is a diagram of a prior art Federated Averaging architecture of DML.
Figure 3 is a block diagram of prior art Federated Learning (FL) in 5GC.
Figure 4 is a signaling diagram of prior art FL in 5GC.
Figure 5 is a signaling diagram of prior art analytics subscription to a NWDAF by a consumer.
Figure 6 is a signaling diagram of prior art ML model request by a consumer to a NWDAF in 5GC.
Figure 7 is a signaling diagram of ML model consumer triggering and control of ML model provisioning.
Figure 8 is a signaling diagram of consumer control of ML training execution.
Figure 9 is a flow diagram of a method of controlling the provision of a ML model, by a consumer of the ML model, in a wireless communication network.
Figure 10 is a flow diagram of a method by a data analytics network function operative in a wireless communication network, of providing a ML model according to specifications of a consumer of the ML model.
Figure 11 is hardware block diagram of an apparatus.
Figure 12 is a functional block diagram of an ML model consumer apparatus.
Figure 13 is a functional block diagram of network node implementing a data analytics network function.

### DETAILED DESCRIPTION

For simplicity and illustrative purposes, the present disclosure is described by referring mainly to an exemplary aspect thereof. In the following description, numerous specific details are set forth in order to provide a thorough understanding of the present disclosure. However, it will be readily apparent to one of ordinary skill in the art that the present disclosure may be practiced without limitation to these specific details. In this description, well known methods and structures have not been described in detail so as not to unnecessarily obscure the present disclosure.

### Procedure for Consumer Trigger and Control of ML Model Provisioning

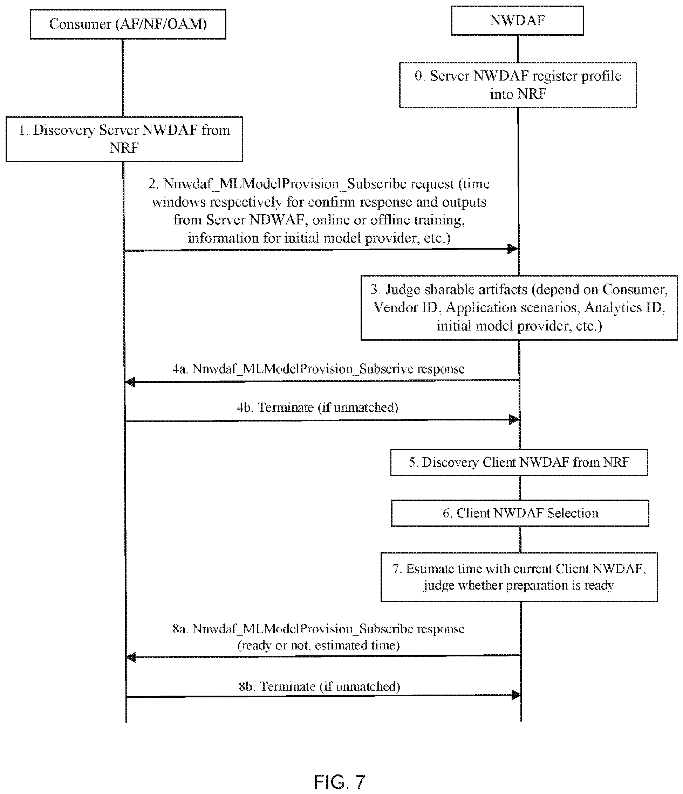

In practice in a wireless communication network, there could be many types of triggers that cause the NWDAF(s) to conduct DML/FL. As a representative and non-limiting example, a consumer-controlled process is explained with reference to a consumer, such as an Application Function (AF), Network Function (NF), or Operation, Administration, and Management (OAM) entity, triggering DML/FL via ML Model Providing request. In this case, the consumer (AF/NF/OAM) is aware that the ML model is produced via DML/FL, it may also provide an ML model architecture, as well as other instructions, to the NWDAF. Procedures for the consumer (AF/NF/OAM) triggering and controlling the preparation phase of ML model provisioning in 5GC is described, with respect to the signal diagram of Figure 7.

At step 0 (*e.g.,* at some time prior to the actual procedure), the NWDAF registers a profile into a registry, *e.g*., an NF Repository Function (NRF). In addition to other NRF registration elements of the NWDAF profile, the following elements are also provided by the NWDAF when registering its profile into NRF:
- Capability of supporting consumer control, *e.g.*, start, modify, restart, and terminate ML model training process according to the interactions with the consumer (AF/NF/OAM)
- List of supported learning architectures, *e.g.,* DML and/or FL framework, *etc.*
- Capability to output intermediate results
- Capability of running initial ML model provided by the consumer (AF/NF/OAM)

NOTE: The NWDAF could also register a profile into a Data Collection Coordination Functionality (DCCF).

At step 2, the consumer (AF/NF/OAM) starts a subscription to the NWDAF by invoking an Nnwdaf_MLModelProvision_Subscribe service operation with consumer request. In addition to other parameters, the following parameters may also be included in the consumer request:
- Time window for confirming response from NWDAF in preparation phase
- Time window for intermediate results report from NWDAF
- Time window for final outputs from NWDAF
- Accuracy level could be achieved by the trained model
- Information about consumer (*e.g.,* Vendor ID, *etc.*)
- Learning architecture, *e.g.,* DML/FL framework, *etc.*
- Output strategy for intermediate results reporting during the ML model training process, *e.g*., binary output strategy or gradient output strategy
- Information about an initial model provider (*e.g*., the provider is internal or external to the consumer, or other vendors)
- Initial ML model structure. In the consumer request, the ML model structure can be provided in any of the following formats:
   If the subscription is terminated
      o ML model ID
      o ML model file address, *e.g*., URL
   If the subscription is continuing
      o An indication of update based on the current ML model
- Indication of online or offline learning. As used herein, online learning refers to real time ingest data during ML model training/learning process (*i.e.,* dynamic dataset, the data may be generated and/or obtained in time during the ML model training/learning process). As used herein, offline learning refers to all the data being ingested at one time (*i.e.,* static dataset, all the data are generated and obtained before the ML model training/learning process).
- Data source, *e.g.,* data type (*e.g.,* the type of data used for inference and/or training), NF ID(s), information of data provider (*e.g*., Analytics Data Repository Function, or ADRF, *etc.*)

At step 3, the NWDAF judges the sharable artifacts based on the consumer type (*e.g.,* internal or external consumer, the Vendor ID, *etc.*)*,* Application scenarios, Analytics ID, information of initial model provider (*e.g.,* NWDAF, or other vendors, *etc.*)*,* and local policy, *etc.*

At steps 4, the NWDAF sends a response to the consumer (AF/NF/OAM) with information about sharable artifacts. If the sharable artifacts provided by the NWDAF are unmatched to the requirement from the consumer, the consumer (AF/NF/OAM) sends a request to terminate the DML/FL.

In particular, at step 4a, the NWDAF responds (Nnwdaf_MLModeIProvision_Subscribe) to the consumer (AF/NF/OAM) with information about sharable artifacts (*e.g.,* trained model, model meta data, model weights, *etc.*)*,* and at step 4b, if unmatched, the consumer (AF/NF/OAM) sends a request to terminate the DML/FL (*e.g.,* it sends an Nnwdaf_ML_Terminate request or an Nnwdaf_MLModelProvision_Unsubscribe request to the NWDAF). This would terminate the procedure.

At step 5 (if not terminated at step 4b), the NWDAF discovers one or more Client NWDAF(s) from the NRF (*e.g.,* using Nnrf_NFDiscovery_Request).

At step 6, the NWDAF performs Client NWDAF Selection based on the requirements from the consumer (AF/NF/OAM) on DML/FL framework, input data source, *etc.*

At step 7, the NWDAF estimates the time for providing the required service (*e.g.,* trained ML model, ML model meta data, ML model weights, *etc.*) to the consumer based on the currently selected Client NWDAF(s), and judges whether the preparation for DML/FL is ready.

NOTE: The time for completing ML model training is estimated if ML model provision is required.

At steps 8, the NWDAF responses to the consumer (AF/NF/OAM) with the information about preparation status and the estimated time for providing the required service (*e.g.,* trained ML model, ML model meta data, ML model weights, *etc.*) within the time window for confirming response.

In particular, at step 8a, the NWDAF sends a response Nnwdaf_MLModelProvision_Subscribe) to the consumer (AF/NF/OAM), and at step 8b, if the estimated time does not match to the requirement from the consumer, the consumer (AF/NF/OAM) sends a request to terminate DML/FL (*e.g.,* sends Nnwdaf_ML_Terminate request or an Nnwdaf_MLModelProvision_Unsubscribe request to the NWDAF).

### Procedure for Consumer Control of Training Execution Phase

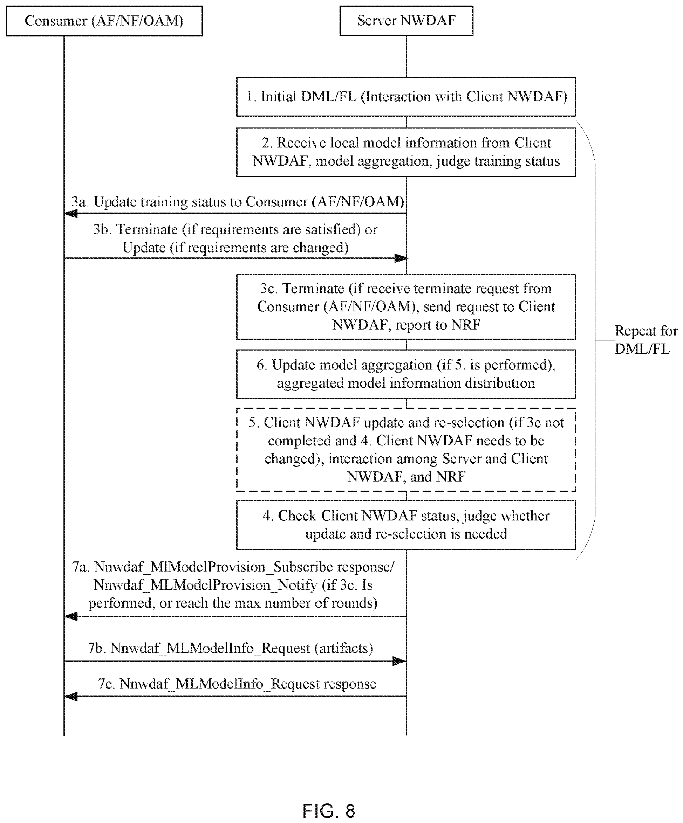

Interactions between the consumer (AF/NF/OAM) and the NWDAF during the training/learning processes are now considered. Procedures for the consumer (AF/NF/OAM) to control the ML model training execution phase in 5GC are discussed with reference to Figure 8.

At step 1, the NWDAF (Server NWDAF) begins initial DML/FL parameter provisioning to all the selected Client NWDAF(s) with a requirement on a time window for local ML model reporting.

At step 2, the NWDAF (Server NWDAF) receives local ML model information from Client NWDAF(s), performs ML model aggregation on the received local ML models, and judges the training status (*e.g.*, whether the current trained ML model could satisfy the accuracy requirement or not, whether it has converged or not, the remaining time to complete training, *etc.*)*.*

At steps 3, the NWDAF (Server NWDAF) updates the training status (judged in step 2) to the consumer (AF/NF/OAM) periodically (one or multiple rounds of training), or dynamically (*e.g*., when a predetermined status required by the consumer is achieved (such as accuracy that can be achieved by the trained ML model), *etc*.)*,* according to the prior communicated output strategy for intermediate results reporting. The consumer (AF/NF/OAM) decides whether to continue or not based on the training status. For example, the consumer (AF/NF/OAM) judges whether the time and accuracy requirements can be satisfied by the current trained ML model (or ML model parameters) provided by the NWDAF (Server NWDAF).

The corresponding processes are as follows:
At step 3a, the NWDAF (Server NWDAF) updates intermediate results, *e.g.,* ML model training status (judged in step 2.), to the consumer (AF/NF/OAM). In the intermediate results report to the consumer (AF/NF/OAM), the following information may be included:
- An indicator of the accuracy that could be achieved by the current trained ML model;
- An indication of whether the training status is converged or not; and
- The remaining time or effort required to complete training, or the remaining unfinished percentage of training tasks.

At step 3b, the consumer (AF/NF/OAM) sends a terminate request to the NWDAF (Server NWDAF) if its requirements can be satisfied based on the current ML model (or ML model parameters). For example. it may send an Nnwdaf_ML_Terminate request or an Nnwdaf_MLModelProvision_Unsubscribe request to the NWDAF (Server NWDAF), or send a request to update requirements if its requirements have changed.

At step 3c, if it receives a termination request from the consumer (AF/NF/OAM), the NWDAF (Server NWDAF) sends a terminate request to the Client NWDAF(s). For example, it may send an Nnwdaf_ML_Terminate request or an Nnwdaf_MLModelProvision_Unsubscribe request to Client NWDAF(s), and report the changes of status (Server and Client NWDAFs) to the NRF.

NOTE: The requirements on time, accuracy, and the like, at the consumer may change during the ML model training processes. The change may be caused, *e.g.,* by interactions of the consumer with other service providers in the same time period.

At step 4, if it received update requirements, or if the ML model training is not complete (as judged in step 2), the NWDAF (Server NWDAF) checks the Client NWDAF(s)' status (capacity, available data, area, *etc.*)*,* and judges whether Client NWDAF(s) update and re-selection is needed.

At step 5, if ML model training is not complete (as judged in step 2), and Client NWDAF update and re-selection is needed (as judged in step 4), the NWDAF (Server NWDAF) initiates the process for Client NWDAF(s) re-selection based on the update information (in step 4).

At step 6, if update and re-selection are performed (in step 5), the NWDAF (Server NWDAF) updates ML model aggregation, and sends the aggregated ML model information to the newly selected Client NWDAF(s).

NOTE: As indicated to the right in Figure 8, steps 2-6 should be repeated until a relevant ML model training termination condition is satisfied (*e.g*., the maximum number of iterations, or the result of loss function is lower than a threshold, or termination request is received).

At step 7, the NWDAF (Server NWDAF) provides the required service to the consumer (AF/NF/OAM) within the time window for final outputs.

NOTE: The NWDAF (Server NWDAF) provides trained ML model (or ML model meta data, ML model weights, etc.) to the consumer (AF/NF/OAM) if ML model provision is required.

At step 7a, the NWDAF (Server NWDAF) provides the required trained ML model (or ML model meta data, ML model weights, *etc.*) to the consumer (AF/NF/OAM). For example, it may send an Nnwdaf_MLModelProvision_Subscribe response or Nnwdaf_MLModelProvision_Notify. The following information may be contained in the outputs:
- The trained ML model (or ML model meta data, ML model weights, *etc.*)
- An indication of the accuracy level that could be achieved by the trained ML model. The accuracy level could be provided, *e.g*., by the ML model meta data, or in a separate method, *etc.*
- The learning architecture used for training the ML model, *e.g.,* DML/FL, *etc.*
- Whether the ML model is obtained by a training or a retraining process, and the corresponding initial ML model, for example
   o If it is a training process, the initial ML model information is provided in step 2 of the consumer trigger and control of ML model provisioning process described above, *e.g.,* by ML model ID or ML model file address (*e.g.,* URL).
   ∘ If it is a retraining process, the initial ML model is the ML model used for starting the retraining; this ML model may be recorded during the training process.
- The trained ML model is obtained by online or offline learning.
- The actual data source used for training the ML model.

At step 7b, the consumer (AF/NF/OAM) sends a request to the NWDAF (Server NWDAF) for model information (*e.g*., Nnwdaf_MLModelInfo_Request) and/or triggers retraining.

At step 7c, the NWDAF (Server NWDAF) sends a response to the consumer (AF/NF/OAM) (*e.g*., Nnwdaf_MLModelInfo_Request response) with the required ML model information.

NOTE: As indicated to the left in Figure 8, steps 2-7 could be repeated for retraining until the service required by the consumer (AF/NF/OAM) is satisfied.

### Methods and Apparatuses

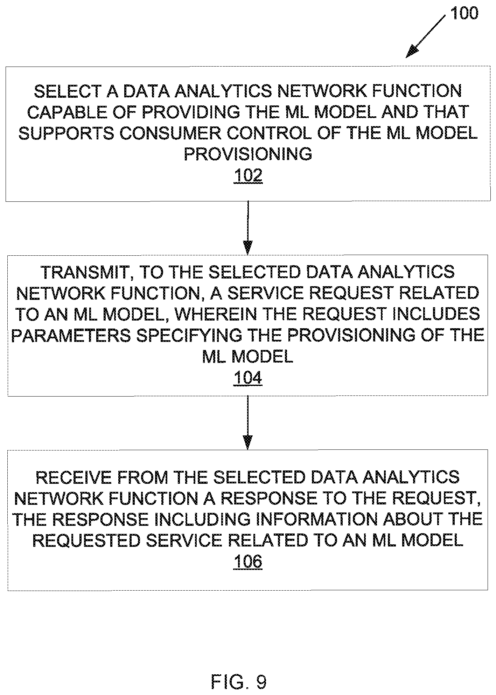

Figure 9 depicts a method 100, in accordance with particular aspects, controlling the provision of an ML model, by a consumer of the ML model, in a wireless communication network. A data analytics network function capable of providing the ML model and that supports consumer control of the ML model provisioning is selected (block 102). A service request related to an ML model is transmitted to the selected data analytics network function, wherein the request includes parameters specifying the provisioning of the ML model (block 104). A response to the request is received from the selected data analytics network function, the response including information about the requested service related to an ML model (block 106).

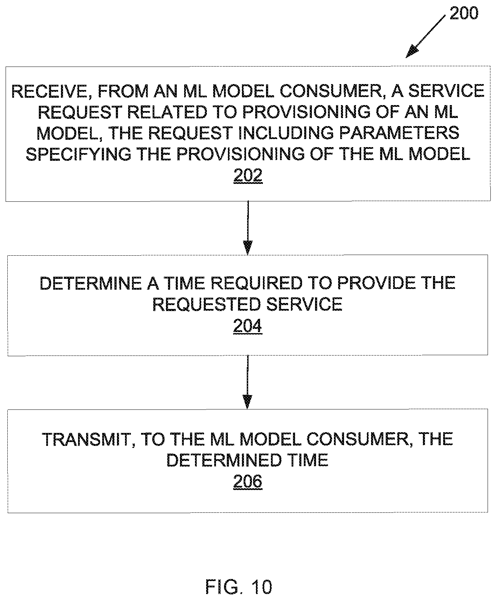

Figure 10 depicts a method 200, in accordance with other particular aspects, of providing a Machine Learning (ML) model according to specifications of a consumer of the ML model, by a data analytics network function operative in a wireless communication network. A service request related to provisioning of an ML model is received from an ML model consumer, the request including parameters specifying the provisioning of the ML model (block 202). A time required to provide the requested service is determined (block 204). The determined time is transmitted to the ML model consumer (block 206).

Note that apparatuses described herein may perform the methods 100, 200 herein and any other processing by implementing any functional means, modules, units, or circuitry. In one aspect, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, *etc.* Program code stored in memory may include program instructions for executing one or more telecommunications and/or data communications protocols as well as instructions for carrying out one or more of the techniques described herein, in several aspects. In aspects that employ memory, the memory stores program code that, when executed by the one or more processors, carries out the techniques described herein.

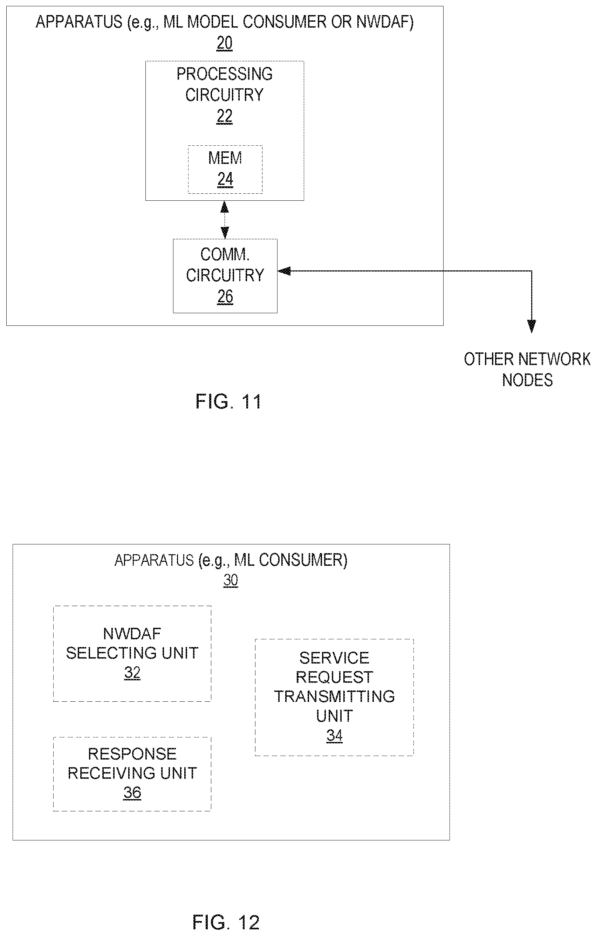

Figure 11 for example illustrates a hardware block diagram of an apparatus 20 as implemented in accordance with one or more aspects of the present disclosure. In one aspect the apparatus 20 may be a consumer of a ML model, such as an Application Function (AF), Network Function (NF), or Operations, Administration and Maintenance (OAM) entity. In another aspect the apparatus 20 may be producer of ML models, such as a Network Data Analytics Function (NWDAF) having at least one Model Training Logical Function (MTLF). As shown, the apparatus 20 includes processing circuitry 22 and communication circuitry 26. The communication circuitry 26 is configured to transmit and/or receive information to and/or from one or more network nodes or entities outside the network, *e.g.,* via any communication technology. The processing circuitry 22 is configured to perform processing described above, such as by executing instructions stored in memory 24, which may be internal, as shown, or may be external to the processing circuitry 22. The processing circuitry 22 in this regard may implement certain functional means, units, or modules.

Figure 12 illustrates a functional block diagram of an ML model consumer apparatus 30 in or connected to a wireless network, according to still other aspects. As shown, the ML model consumer apparatus 30 implements various functional means, units, or modules, *e.g.,* via the processing circuitry 22 in Figure 11 and/or via software code. These functional means, units, or modules, *e.g.,* for implementing the method 100 herein, include for instance: NWDAF selecting unit 32, service request transmitting unit 34, and response receiving unit 36.

NWDAF selecting unit 32 is configured to select a data analytics network function capable of providing the ML model and that supports consumer control of the ML model provisioning. Service request transmitting unit 34 is configured to transmit, to the selected data analytics network function, a service request related to an ML model, wherein the request includes parameters specifying the provisioning of the ML model. Response receiving unit 36 is configured to receive from the selected data analytics network function a response to the request, the response including information about the requested service related to an ML model.

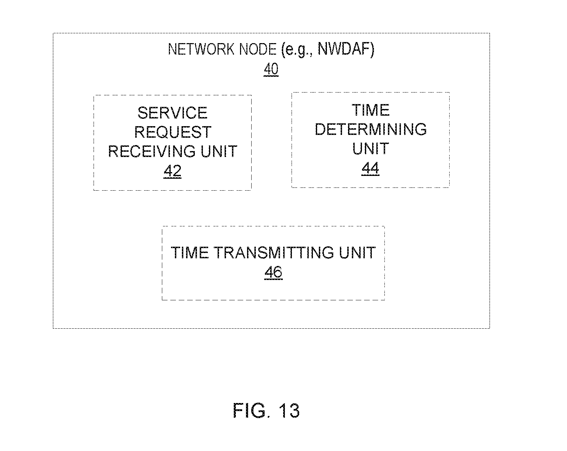

Figure 13 illustrates a functional block diagram of a network node 40 implementing an NWDAF in a wireless network, according to still other aspects. As shown, the NWDAF network node 40 implements various functional means, units, or modules, *e.g.,* via the processing circuitry 22 in Figure 11 and/or via software code. These functional means, units, or modules, *e.g.,* for implementing the method 200 herein, include for instance: service request receiving unit 42, time determining unit 44, time transmitting unit 46.

Service request receiving unit 42 is configured to receive, from an ML model consumer, a service request related to provisioning of an ML model, the request including parameters specifying the provisioning of the ML model. Time determining unit 44 is configured to determine a time required to provide the requested service. Time transmitting unit 46 is configured to transmit, to the ML model consumer, the determined time.

Those skilled in the art will also appreciate that aspects herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Aspects further include a carrier containing such a computer program. This carrier may comprise one of an electronic signal, optical signal, radio signal, or computer readable storage medium.

In this regard, aspects herein also include a computer program product stored on a non-transitory computer readable (storage or recording) medium and comprising instructions that, when executed by a processor of an apparatus, cause the apparatus to perform as described above.

Aspects further include a computer program product comprising program code portions for performing the steps of any of the aspects herein when the computer program product is executed by a computing device. This computer program product may be stored on a computer readable recording medium.

Aspects of the present disclosure present numerous advantages over the prior art. In prior art solutions, such as the one in 3GPP TR 23.700-91 for Federated Learning (FL) among multiple NWDAF instances, neither the model provisioning process nor the training/learning processes can be controlled by the ML model consumer. Aspects disclosed and claimed herein provide for ML model consumer to control both the provisioning of an ML model, and its training execution process. This allows the ML model consumer to specify numerous parameters, such as the learning architecture (*e.g*., DML/FL); the type of data used for training (*e.g*., online or offline); time windows for critical aspects of the ML model provisioning and training (*e.g*., for confirming response from NWDAF in preparation phase, for intermediate results reporting from NWDAF, and for final outputs from NWDAF); an accuracy level the trained ML model can achieve; an output strategy for intermediate results reported during training; information about an initial ML model to be used; and the like. Furthermore, during training execution, the ML model consumer can specify that the NWDAF report various parameters related to the ML model and its training process, and the ML model can terminate the ML model provisioning and/or training process at several points, if the reported parameters do not match requirements of the ML model consumer. Aspects of the present disclosure thus support and enable use cases in wireless communication networks that are heretofore impossible to implement.

For ease of explication and to place the disclosure in a real-world context, aspects of the present disclosure are presented herein in the context of 3GPP 5G core networks (5GC). However, this is not a limitation of aspects of the present disclosure. Methods and signaling disclosed herein may be advantageously employed in any wireless communication network in which ML model consumers (*e.g.*, AF, NF, or OAM) may need or desire to specify aspects of the ML model provisioning and/or training execution.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the aspects disclosed herein may be applied to any other aspect, wherever appropriate. Likewise, any advantage of any of the aspects may apply to any other aspects, and vice versa. Other objectives, features, and advantages of the enclosed aspects will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein. As used herein, the term "configured to" means set up, organized, adapted, or arranged to operate in a particular way; the term is synonymous with "designed to." As used herein, the term "substantially" means nearly or essentially, but not necessarily completely; the term encompasses and accounts for mechanical or component value tolerances, measurement error, random variation, and similar sources of imprecision.

Some of the aspects contemplated herein are described more fully with reference to the accompanying drawings. Other aspects, however, are contained within the scope of the subject matter disclosed herein. The disclosed subject matter should not be construed as limited to only the aspects set forth herein; rather, these aspects are provided by way of example to convey the scope of the subject matter to those skilled in the art.

## Claims

1. A method (100) of controlling the provision of a Machine Learning, ML, model, by a consumer (20, 30) of the ML model, in a wireless communication network, **characterized by**:
selecting (102) a data analytics network function (20, 40) capable of providing the ML model and that supports consumer control of the ML model provisioning;
transmitting (104), to the selected data analytics network function (20, 40), a service request related to an ML model, wherein the request includes parameters specifying the provisioning of the ML model; and
receiving (106) from the selected data analytics network function (20, 40) a response to the request, the response including information about the ML model preparation status and an estimated time for providing the requested service related to the ML model.

2. The method (100) of claim 1, further **characterized by**, prior to selecting (102) a data analytics network function (20, 40):
discovering, in the network, one or more data analytics network functions (20, 40) capable of providing the ML model and that supports consumer control of the ML model provisioning; and
selecting the data analytics network function (20, 40) from among those discovered.

3. The method (100) of any preceding claim, further **characterized by**, after transmitting (104) the request and prior to receiving (106) the response:
receiving from the selected data analytics network function (20, 40) information about sharable artifacts related to the ML model;
in response to the sharable artifacts not matching predetermined requirements of the consumer, terminating the request; and
in response to the sharable artifacts matching predetermined requirements of the consumer, waiting for the response from the selected data analytics network function (20, 40); and
wherein, optionally, the sharable artifacts comprise one or more of whether the consumer is internal or external to the network, application scenarios, analytics identification, identification of an initial model provider, and local policy.

4. The method (100) of claim 2 or 3 wherein {i} discovering one or more data analytics network functions (20, 40) that supports consumer control of the ML model provisioning comprises sending a discovery request to a network repository function (20, 40) wherein the discovery request includes parameters specifying characteristics of the data analytics network function (20, 40), the ML model, or the ML model provisioning,
wherein, optionally, the parameters specifying characteristics of the data analytics network function (20, 40), the ML model, or the ML model provisioning comprise one or more of a capability of the data analytics network function (20, 40) to support consumer control of ML model training, supported ML model learning architectures, a capability of the data analytics network function (20, 40) to output intermediate results during ML model training, and whether an initial ML model structure may be provided by the consumer; and/or
{ii} the parameters specifying the provisioning of the ML model comprise one or more of a time window for intermediate or final outputs, an accuracy level that can be achieved by the ML model, a learning architecture, output strategy for intermediate results during ML model training, information about an initial ML model provider, an initial ML model structure, an indication whether the learning is online or offline, and information about data source(s).

5. The method (100) of claim 1 further **characterized by**, in response to the estimated time not matching a predetermined requirement of the consumer, terminating the request to the selected data analytics network function (20, 40).

6. The method (100) of any preceding claim further **characterized by**, after receiving the response from the selected data analytics network function (20, 40), receiving, from the selected data analytics network function (20, 40), a status update regarding training of the ML model; and
wherein, optionally: {i} the status update comprises one or more of an accuracy that can be achieved by the current trained ML model, an indication whether training of the ML model has converged, and an indication of the time or percentage of task to complete training the ML model; or
{ii} the method is further **characterized by**, in response to the status update not matching predetermined requirements of the consumer, terminating the ML model training; or
{iii} the method is further **characterized by** receiving, from the selected data analytics network function, one of a trained ML model, ML model meta data, and ML model weights, and
wherein, optionally, receiving one of a trained ML model, ML model meta data, and ML model weights further comprises receiving one or more of an accuracy that can be achieved by the trained ML model, a learning architecture used for training the ML model, an indication whether the ML model was obtained by online or offline learning, a data source(s) used for training the ML model.

7. The method (100) of any preceding claim wherein the consumer is one of an Application Function, a Network Function, and an Operations, Administration, and Management entity; and/or
wherein the data analytics network functions (20, 40) capable of providing the ML model are Network Data Analytics Functions (20, 40) that include a Model Training Logical Function.

8. An ML model consumer apparatus (20, 30) operative in or connected to a wireless communication network, **characterized by**:
communication circuitry (26); and
processing circuitry (22) operatively connected to the communication circuitry (26), the processing circuitry (22) configured to
transmit (102), to a selected data analytics network function (20, 40) capable of providing the ML model and that supports consumer control of the ML model provisioning, a service request related to an ML model, wherein the request includes parameters specifying the provisioning of the ML model; and
receive (104) from the selected data analytics network function (20, 40) a response to the request, the response including information about the ML model preparation status and an estimated time for providing the requested service related to the ML model.

9. The consumer apparatus (20, 30) of claim 8, wherein the processing circuitry is configured to perform the method according to any of claims 1 to 6.

10. A method (200), by a data analytics network function (20, 40) operative in a wireless communication network, of providing a Machine Learning, ML, model according to specifications of a consumer of the ML model, **characterized by**:
receiving (202), from an ML model consumer (20, 30), a service request related to provisioning of an ML model, the request including parameters specifying the provisioning of the ML model;
determining (204) a time required to provide the requested service;
transmitting (206), to the ML model consumer (20,30), the determined time.

11. The method (200) of claim 10 further **characterized by**, prior to receiving (202) the service request from the ML model consumer (20, 30), registering a profile with a network registry function, the profile **characterized by** one or more of a capability of supporting consumer control of ML model provisioning, an indication of supported learning architectures, a capability of providing intermediate results, and a capability of running an initial ML model provided by a consumer (20, 30); and/or
wherein parameters specifying the provisioning of the ML model comprise one or more of a time window for intermediate or final outputs, an accuracy level that can be achieved by the ML model, a learning architecture, output strategy for intermediate results during ML model training, information about an initial ML model provider, an initial ML model structure, an indication whether the learning is online or offline, and information about data source(s).

12. The method (200) of claim 10 or 11, further **characterized by**:
judging sharable artifacts based on one or more of consumer type, application scenario, analytics identification, information of the initial model provider, and local policy;
transmitting, to the ML model consumer (20, 30), information about the sharable artifacts.

13. The method (200) of claim 12, wherein the parameters specifying the requested service related to an ML model comprise a learning architecture being a Distributed Machine Learning/Federated Learning, DML/FL, architecture, and further **characterized by**:
discovering one or more client data analytics network function to utilize in DML/FL ML model training; and
selecting one or more discovered client data analytics network functions.

14. The method (200) of claim 13 further **characterized by**:
provisioning the selected client data analytics network functions with one of initial DML/FL parameters and requirement on time window for local model reporting.

15. The method (200) of claim 14 further **characterized by**:
receiving local model information from client data analytics network functions;
performing model aggregation on the received local model information; and
judging training status.

16. The method (200) of claim 15 further **characterized by** updating the ML model consumer (20, 30) on ML model training status, wherein the method is optionally further **characterized by**, after updating the ML model consumer on ML model training status: {i} in response to a termination of the service request from the ML model customer:
terminating the ML model training; and
updating the selected client data analytics network function of the ML model training termination; or
{ii} receiving, from the ML model consumer, updated parameters relating to the ML model; and
in response to the updated parameters, reselecting client data analytics network functions, and
optionally, after reselecting client data analytics network functions, updating ML model aggregation and aggregated ML model information distribution to the client data analytics network functions.

17. A network node (20, 40) implementing a data analytics network function in a wireless communication network, **characterized by**:
communication circuitry (26); and
processing circuitry (22) operatively connected to the communication circuitry (26), the processing circuitry (22) configured to
receive (202), from an ML model consumer (20, 30), a service request related to provisioning of an ML model, the request including parameters specifying the provisioning of the ML model;
determine (204) a time required to provide the requested service;
transmit (206), to the ML model consumer (20, 30), the determined time.

18. The network node (20, 40) of claim 14 wherein the processing circuitry is configured to perform the method according to any of claims 10 to 16.

## Patentansprüche

1. Verfahren (100) zur Steuerung der Bereitstellung eines Modells für maschinelles Lernen, ML, durch einen Verbraucher (20, 30) des ML-Modells in einem Drahtloskommunikationsnetzwerk, **gekennzeichnet durch** Folgendes:
Auswählen (102) einer Datenanalyse-Netzwerkfunktion (20, 40), die zum Bereitstellen des ML-Modells in der Lage ist und die Verbrauchersteuerung der ML-Modellbereitstellung unterstützt;
Senden (104) einer Dienstanforderung in Bezug auf ein ML-Modell an die ausgewählte Datenanalyse-Netzwerkfunktion (20, 40), wobei die Anforderung Parameter umfasst, die die Bereitstellung des ML-Modells spezifizieren; und
Empfangen (106) einer Antwort von der ausgewählten Datenanalyse-Netzwerkfunktion (20, 40) auf die Anforderung, wobei die Antwort Informationen über den ML-Modellvorbereitungsstatus und eine geschätzte Zeit zum Bereitstellen des angeforderten Diensts in Bezug auf das ML-Modell umfasst.

2. Verfahren (100) nach Anspruch 1, ferner **gekennzeichnet durch** Folgendes vor dem Auswählen (102) Datenanalyse-Netzwerkfunktion (20, 40):
Erkennen einer oder mehrerer Datenanalyse-Netzwerkfunktionen (20, 40) in dem Netzwerk, die zum Bereitstellen des ML-Modells in der Lage sind und die Verbrauchersteuerung der ML-Modellbereitstellung unterstützen; und
Auswählen der Datenanalyse-Netzwerkfunktion (20, 40) aus jenen, die erkannt wurden.

3. Verfahren (100) nach einem der vorhergehenden Ansprüche, ferner **gekennzeichnet durch** Folgendes nach dem Senden (104) der Anforderung und vor dem Empfangen (106) der Antwort:
Empfangen von Informationen über gemeinsam nutzbare Artefakte in Bezug auf das ML-Modell von der ausgewählten Datenanalyse-Netzwerkfunktion (20, 40);
in Reaktion darauf, dass die gemeinsam nutzbaren Artefakte nicht vorgegebenen Anforderungen des Verbrauchers entsprechen, Beenden der Anforderung; und
in Reaktion darauf, dass die gemeinsam nutzbaren Artefakte vorgegebenen Anforderungen des Verbrauchers entsprechen, Warten auf die Antwort von der ausgewählten Datenanalyse-Netzwerkfunktion (20, 40); und
wobei optional die gemeinsam nutzbaren Artefakte eines oder mehrere dessen, ob sich der Verbraucher innerhalb oder außerhalb des Netzwerks befindet, von Anwendungsszenarien, einer Analyseidentifikation, einer Identifikation eines anfänglichen Modellanbieters und einer lokalen Richtlinie umfassen.

4. Verfahren (100) nach Anspruch 2 oder 3, wobei {i} das Erkennen einer oder mehrerer Datenanalyse-Netzwerkfunktionen (20, 40), die Verbrauchersteuerung der ML-Modellbereitstellung unterstützen, Senden einer Erkennungsanforderung an eine Netzwerk-Repository-Funktion (20, 40) umfasst, wobei die Erkennungsanforderung Parameter umfasst, die Charakteristiken der Datenanalyse-Netzwerkfunktion (20, 40), des ML-Modells oder der ML-Modellbereitstellung spezifizieren,
wobei optional die Parameter, die Charakteristiken der Datenanalyse-Netzwerkfunktion (20, 40), des ML-Modells oder der ML-Modellbereitstellung spezifizieren, eines oder mehrere von einer Fähigkeit der Datenanalyse-Netzwerkfunktion (20, 40) zum Unterstützen von Verbrauchersteuerung des ML-Modelltrainings, unterstützten ML-Modelllernarchitekturen, einer Fähigkeit der Datenanalyse-Netzwerkfunktion (20, 40) zum Ausgeben von Zwischenergebnissen während des ML-Modelltrainings und, ob eine anfängliche ML-Modellstruktur durch den Verbraucher bereitgestellt werden kann, umfassen; und/oder
{ii} die Parameter, die die Bereitstellung des ML-Modells spezifizieren, eines oder mehrere von einem Zeitfenster für Zwischen- oder Endausgaben, einem Genauigkeitsgrad, der durch das ML-Modell erreicht werden kann, einer Lernarchitektur, einer Ausgabestrategie für Zwischenergebnisse während des ML-Modelltrainings, Informationen über einen anfänglichen ML-Modellanbieter, einer anfänglichen ML-Modellstruktur, einer Angabe, ob das Lernen online oder offline erfolgt, und Informationen über Datenquelle(n) umfassen.

5. Verfahren (100) nach Anspruch 1, ferner **gekennzeichnet durch** Beenden der Anforderung an die ausgewählte Datenanalyse-Netzwerkfunktion (20, 40) in Reaktion darauf, dass die geschätzte Zeit nicht einer vorgegebenen Anforderung des Verbrauchers entspricht.

6. Verfahren (100) nach einem der vorhergehenden Ansprüche, ferner **gekennzeichnet durch** Empfangen einer Statusaktualisierung hinsichtlich des Trainings des ML-Modells von der ausgewählten Datenanalyse-Netzwerkfunktion (20, 40) nach dem Empfangen der Antwort von der ausgewählten Datenanalyse-Netzwerkfunktion (20, 40); und
wobei optional: {i} die Statusaktualisierung eines oder mehrere von einer Genauigkeit, die durch das aktuelle trainierte ML-Modell erreicht werden kann, einer Angabe, ob das Training des ML-Modell konvergiert ist, und einer Angabe der Zeit oder des Prozentsatzes der Aufgabe bis zum Abschluss des Trainings des ML-Modells umfasst; oder
{ii} das Verfahren ferner **gekennzeichnet ist durch** Beenden des ML-Modelltrainings in Reaktion darauf, dass die Statusaktualisierung nicht vorgegebenen Anforderungen des Verbrauchers entspricht; oder
{iii} das Verfahren ferner **gekennzeichnet ist durch** Empfangen eines von einem trainierten ML-Modell, ML-Modell-Metadaten und ML-Modellgewichten von der ausgewählten Datenanalyse-Netzwerkfunktion, und
wobei optional das Empfangen eines von einem trainierten ML-Modell, ML-Modell-Metadaten und ML-Modellgewichten ferner Empfangen eines oder mehrerer von einer Genauigkeit, die durch das trainierte ML-Modell erreicht werden kann, einer Lernarchitektur, die zum Trainieren des ML-Modells verwendet wird, einer Angabe, ob das ML-Modell durch Online- oder Offline-Lernen erhalten wurde, einer oder mehreren Datenquelle(n) umfasst, die zum Trainieren des ML-Modells verwendet werden.

7. Verfahren (100) nach einem der vorhergehenden Ansprüche, wobei der Verbraucher eines von einer Anwendungsfunktion, einer Netzwerkfunktion und einer Betriebs-, Verwaltungs- und Managemententität ist; und/oder
wobei die Datenanalyse-Netzwerkfunktionen (20, 40), die zum Bereitstellen des ML-Modells in der Lage sind, Netzwerkdatenanalysefunktionen (20, 40) sind, die eine Modelltrainingslogikfunktion umfassen.

8. ML-Modellverbrauchervorrichtung (20, 30), die in einem Drahtloskommunikationsnetzwerk operiert oder damit verbunden ist, **gekennzeichnet durch** Folgendes:
Kommunikationsschaltungsanordnung (26); und
Verarbeitungsschaltungsanordnung (22), die funktionell mit der Kommunikationsschaltungsanordnung (26) gekoppelt ist, wobei die Verarbeitungsschaltungsanordnung (22) zu Folgendem ausgelegt ist:
Senden (102) einer Dienstanforderung in Bezug auf ein ML-Modell an eine ausgewählte Datenanalyse-Netzwerkfunktion (20, 40), die zum Bereitstellen des ML-Modells in der Lage ist und Verbrauchersteuerung der ML-Modellbereitstellung unterstützt, wobei die Anforderung Parameter umfasst, die die Bereitstellung des ML-Modells spezifizieren; und
Empfangen (104) einer Antwort von der ausgewählten Datenanalyse-Netzwerkfunktion (20, 40) auf die Anforderung, wobei die Antwort Informationen über den ML-Modellvorbereitungsstatus und eine geschätzte Zeit zum Bereitstellen des angeforderten Diensts in Bezug auf das ML-Modell umfasst.

9. Verbrauchervorrichtung (20, 30) nach Anspruch 8, wobei die Verarbeitungsschaltungsanordnung ferner zum Durchführen des Verfahrens nach einem der Ansprüche 1 bis 6 ausgelegt ist.

10. Verfahren (200) zur Bereitstellung eines Modells für maschinelles Lernen, ML, durch eine Datenanalyse-Netzwerkfunktion (20, 40), die in einem Drahtloskommunikationsnetzwerk operiert, gemäß Spezifikationen eines Verbrauchers des ML-Modells, **gekennzeichnet durch** Folgendes:
Empfangen (202) einer Dienstanforderung in Bezug auf die Bereitstellung eines ML-Modells von einem ML-Modellverbraucher (20, 30), wobei die Anforderung Parameter umfasst, die die Bereitstellung des ML-Modells spezifizieren;
Bestimmen (204) einer Zeit, die zum Bereitstellen des angeforderten Diensts benötigt wird;
Senden (206) der bestimmten Zeit an den ML-Modellverbraucher (20, 30).

11. Verfahren (200) nach Anspruch 10, ferner **gekennzeichnet durch** Registrieren eines Profils bei einer Netzwerkregistrierungsfunktion vor dem Empfangen (202) der Dienstanforderung von dem ML-Modellverbraucher (20, 30), wobei das Profil **gekennzeichnet ist durch** eines oder mehrere von einer Fähigkeit zum Unterstützen von Verbrauchersteuerung der ML-Modellbereitstellung, einer Angabe unterstützter Lernarchitekturen, einer Fähigkeit zum Bereitstellen von Zwischenergebnissen und einer Fähigkeit zum Ausführen eines anfänglichen ML-Modells, das durch einen Verbraucher (20, 30) bereitgestellt wird; und/oder
wobei Parameter, die die Bereitstellung des ML-Modells spezifizieren, eines oder mehrere von einem Zeitfenster für Zwischen- oder Endausgaben, einem Genauigkeitsgrad, der durch das ML-Modell erreicht werden kann, einer Lernarchitektur, einer Ausgabestrategie für Zwischenergebnisse während des ML-Modelltrainings, Informationen über einen anfänglichen ML-Modellanbieter, einer anfänglichen ML-Modellstruktur, einer Angabe, ob das Lernen online oder offline erfolgt, und Informationen über Datenquelle(n) umfassen.

12. Verfahren (200) nach Anspruch 10 oder 11, ferner **gekennzeichnet durch** Folgendes:
Beurteilen gemeinsam nutzerbarer Artefakte basierend auf einem oder mehreren von einem Verbrauchertyp, einem Anwendungsszenario, einer Analyseidentifikation, Informationen des anfänglichen Modellanbieters und einer lokalen Richtlinie;
Senden von Informationen über die gemeinsam nutzbaren Artefakte an den ML-Modellverbraucher (20, 30).

13. Verfahren (200) nach Anspruch 12, wobei die Parameter, die den angeforderten Dienst in Bezug auf ein ML-Modell spezifizieren, umfassen, dass eine Lernarchitektur eine Distributed Machine Learning/Federated Learning-Architektur, DML/FL-Architektur, ist und ferner **gekennzeichnet durch** Folgendes:
Erkennen einer oder mehrerer Client-Datenanalyse-Netzwerkfunktionen zur Verwendung beim DML/FL-ML-Training; und
Auswählen einer oder mehrerer erkannter Client-Datenanalyse-Netzwerkfunktionen.

14. Verfahren (200) nach Anspruch 13, ferner **gekennzeichnet durch** Folgendes:
Bereitstellen der ausgewählten Client-Datenanalyse-Netzwerkfunktion mit einem von anfänglichen DML/FL-Parametern und einer Anforderung für ein Zeitfenster zur lokalen Modellberichterstattung.

15. Verfahren (200) nach Anspruch 14, ferner **gekennzeichnet durch**:
Empfangen lokaler Modellinformationen von Client-Datenanalyse-Netzwerkfunktionen;
Durchführen von Modellaggregation anhand der empfangenen lokalen Modellinformationen; und
Beurteilen des Trainingsstatus.

16. Verfahren (200) nach Anspruch 15, ferner **gekennzeichnet durch** Aktualisieren des ML-Modellverbrauchers (20, 30) anhand des ML-Modelltrainingsstatus, wobei das Verfahren nach dem Aktualisieren des ML-Modellverbrauchers anhand der ML-Modelltrainingsstatus optional ferner durch Folgendes gekennzeichnet ist: {i} in Reaktion auf eine Beendigung der Dienstanforderung von dem ML-Modellverbraucher:
Beenden des ML-Modelltrainings; und
Aktualisieren der ausgewählten Client-Datenanalyse-Netzwerkfunktion der ML-Modelltrainingsbeendigung; oder
{ii} Empfangen aktualisierter Parameter in Bezug auf das ML-Modell von dem ML-Modellverbraucher; und
in Reaktion auf die aktualisierten Parameter Neuauswählen von Client-Datenanalyse-Netzwerkfunktionen und
optional Aktualisieren der ML-Modellaggregation und Verteilung aggregierter ML-Modellinformation an die Client-Datenanalyse-Netzwerkfunktionen nach dem Neuauswählen von Client-Datenanalyse-Netzwerkfunktionen.

17. Netzwerkknoten (20, 40), der eine Datenanalyse-Netzwerkfunktion in einem Drahtloskommunikationsnetzwerk implementiert und durch Folgendes gekennzeichnet ist:
Kommunikationsschaltungsanordnung (26); und
Verarbeitungsschaltungsanordnung (22), die funktionell mit der Kommunikationsschaltungsanordnung (26) gekoppelt ist, wobei die Verarbeitungsschaltungsanordnung (22) zu Folgendem ausgelegt ist:
Empfangen (202) einer Dienstanforderung in Bezug auf die Bereitstellung eines ML-Modells von einem ML-Modellverbraucher (20, 30), wobei die Anforderung Parameter umfasst, die die Bereitstellung des ML-Modells spezifizieren;
Bestimmen (204) einer Zeit, die zum Bereitstellen des angeforderten Diensts benötigt wird;
Senden (206) der bestimmten Zeit an den ML-Modellverbraucher (20, 30).

18. Netzwerkknoten (20, 40) nach Anspruch 14, wobei die Verarbeitungsschaltungsanordnung ferner zum Durchführen des Verfahrens nach einem der Ansprüche 10 bis 16 ausgelegt ist.

## Revendications

1. Procédé (100) de commande de la fourniture d'un modèle d'apprentissage automatique, ML, par un consommateur (20, 30) du modèle ML, dans un réseau de communication sans fil, **caractérisé par** :
la sélection (102) d'une fonction de réseau d'analyse de données (20, 40) capable de fournir le modèle ML et qui prend en charge une commande par le consommateur de la fourniture de modèle ML ;
la transmission (104), à la fonction de réseau d'analyse de données (20, 40) sélectionnée, d'une demande de service liée à un modèle ML, dans lequel la demande inclut des paramètres spécifiant la fourniture du modèle ML ; et
la réception (106), depuis la fonction de réseau d'analyse de données (20, 40) sélectionnée, d'une réponse à la demande, la réponse incluant des informations relatives à l'état de préparation de modèle ML et un temps estimé pour fournir le service demandé lié au modèle ML.

2. Procédé (100) selon la revendication 1, **caractérisé en outre par**, avant la sélection (102) d'une fonction de réseau d'analyse de données (20, 40) :
la découverte, dans le réseau, d'une ou plusieurs fonctions de réseau d'analyse de données (20, 40) capables de fournir le modèle ML et qui prennent en charge une commande par le consommateur de la fourniture de modèle ML ; et
la sélection de la fonction de réseau d'analyse de données (20, 40) parmi celles découvertes.

3. Procédé (100) selon l'une quelconque des revendications précédentes, **caractérisé en outre par**, après la transmission (104) de la demande et avant la réception (106) de la réponse :
la réception, depuis la fonction de réseau d'analyse de données (20, 40) sélectionnée, d'informations relatives à des artefacts partageables liés au modèle ML ;
en réponse au fait que les artefacts partageables ne correspondent pas à des exigences prédéterminées du consommateur, la terminaison de la demande ; et
en réponse au fait que les artefacts partageables correspondent à des exigences prédéterminées du consommateur, l'attente de la réponse de la fonction de réseau d'analyse de données (20, 40) sélectionnée ; et
dans lequel, facultativement, les artefacts partageables comprennent un ou plusieurs parmi si le consommateur est interne ou externe au réseau, des scénarios d'application, une identification d'analyse, une identification d'un fournisseur de modèle initial, et une politique locale.

4. Procédé (100) selon la revendication 2 ou 3, dans lequel {i} la découverte d'une ou plusieurs fonctions de réseau d'analyse de données (20, 40) qui prennent en charge une commande par le consommateur de la fourniture de modèle ML comprend l'envoi d'une demande de découverte à une fonction de référentiel de réseau (20, 40), dans lequel la demande de découverte inclut des paramètres spécifiant des caractéristiques de la fonction de réseau d'analyse de données (20, 40), le modèle ML, ou la fourniture de modèle ML,
dans lequel, facultativement, les paramètres spécifiant des caractéristiques de la fonction de réseau d'analyse de données (20, 40), du modèle ML ou de la fourniture de modèle ML comprennent un ou plusieurs parmi une capacité de la fonction de réseau d'analyse de données (20, 40) à prendre en charge une commande par le consommateur d'un entraînement de modèle ML, des architectures d'apprentissage de modèle ML prises en charge, une capacité de la fonction de réseau d'analyse de données (20, 40) à délivrer des résultats intermédiaires pendant un entraînement de modèle ML, et si une structure de modèle ML initial peut être fournie ou non par le consommateur ; et/ou
{ii} les paramètres spécifiant la fourniture du modèle ML comprennent une ou plusieurs parmi une fenêtre temporelle pour des sorties intermédiaires ou finales, un niveau de précision qui peut être atteint par le modèle ML, une architecture d'apprentissage, une stratégie de sortie pour des résultats intermédiaires pendant un entraînement de modèle ML, des informations relatives à un fournisseur de modèle ML initial, une structure de modèle ML initial, une indication si l'apprentissage est en ligne ou hors ligne, et des informations relatives à une ou plusieurs sources de données.

5. Procédé (100) selon la revendication 1, **caractérisé en outre par**, en réponse au fait que le temps estimé ne correspond pas à une exigence prédéterminée du consommateur, la terminaison de la demande à la fonction de réseau d'analyse de données (20, 40) sélectionnée.

6. Procédé (100) selon l'une quelconque des revendications précédentes, **caractérisé en outre par**, après la réception de la réponse depuis la fonction de réseau d'analyse de données (20, 40) sélectionnée, la réception, depuis la fonction de réseau d'analyse de données (20, 40) sélectionnée, d'une mise à jour d'état concernant un entraînement du modèle ML ; et
dans lequel, facultativement : {i} la mise à jour d'état comprend une ou plusieurs parmi une précision qui peut être atteinte par le modèle ML entraîné actuel, une indication si un entraînement du modèle ML a convergé ou non, et une indication du temps ou du pourcentage de tâche pour achever un entraînement du modèle ML ; ou
{ii} le procédé est en outre **caractérisé par**, en réponse au fait que la mise à jour d'état ne correspond pas à des exigences prédéterminées du consommateur, la terminaison de l'entraînement de modèle ML ; ou
{iii} le procédé est en outre **caractérisé par** la réception, depuis la fonction de réseau d'analyse de données sélectionnée, d'un parmi un modèle ML entraîné, des métadonnées de modèle ML et des poids de modèle ML, et
dans lequel, facultativement, la réception d'un parmi un modèle ML entraîné, des métadonnées de modèle ML et des poids de modèle ML comprend en outre la réception d'une ou plusieurs parmi une précision qui peut être atteinte par le modèle ML entraîné, une architecture d'apprentissage utilisée pour entraîner le modèle ML, une indication indiquant si le modèle ML a été obtenu par un apprentissage en ligne ou hors ligne, et une ou plusieurs sources de données utilisées pour entraîner le modèle ML.

7. Procédé (100) selon l'une quelconque des revendications précédentes, dans lequel le consommateur est l'une parmi une fonction d'application, une fonction de réseau, et une entité d'exploitation, d'administration et de gestion ; et/ou
dans lequel les fonctions de réseau d'analyse de données (20, 40) capables de fournir le modèle ML sont des fonctions de réseau d'analyse de données (20, 40) qui incluent une fonction logique d'entraînement de modèle.

8. Appareil consommateur de modèle ML (20, 30) fonctionnel dans un réseau de communication sans fil ou connecté à celui-ci, **caractérisé par** :
une circuiterie de communication (26) ; et
une circuiterie de traitement (22) connectée de manière fonctionnelle à la circuiterie de communication (26), la circuiterie de traitement (22) étant configurée pour :
transmettre (102), à une fonction de réseau d'analyse de données (20, 40) sélectionnée capable de fournir le modèle ML et qui prend en charge une commande par le consommateur de la fourniture de modèle ML, une demande de service liée à un modèle ML, dans lequel la demande inclut des paramètres spécifiant la fourniture du modèle ML ; et
recevoir (104), depuis la fonction de réseau d'analyse de données (20, 40) sélectionnée, d'une réponse à la demande, la réponse incluant des informations relatives à l'état de préparation de modèle ML et un temps estimé pour fournir le service demandé lié au modèle ML.

9. Appareil consommateur (20, 30) selon la revendication 8, dans lequel la circuiterie de traitement est configurée pour réaliser le procédé selon l'une quelconque des revendications 1 à 6.

10. Procédé (200), par une fonction de réseau d'analyse de données (20, 40) fonctionnelle dans un réseau de communication sans fil, de fourniture d'un modèle d'apprentissage automatique, ML, selon des spécifications d'un consommateur du modèle ML, **caractérisé par** :
la réception (202), depuis un consommateur de modèle ML (20, 30), d'une demande de service liée à la fourniture d'un modèle ML, la demande incluant des paramètres spécifiant la fourniture du modèle ML ;
la détermination (204) d'un temps nécessaire pour fournir le service demandé ;
la transmission (206), au consommateur de modèle ML (20, 30), du temps déterminé.

11. Procédé (200) selon la revendication 10, **caractérisé en outre par**, avant la réception (202) de la demande de service depuis le consommateur de modèle ML (20, 30), l'enregistrement d'un profil auprès d'une fonction de registre de réseau, le profil étant **caractérisé par** une ou plusieurs parmi une capacité de prise en charge d'une commande par le consommateur d'une fourniture de modèle ML, une indication d'architectures d'apprentissage prises en charge, une capacité de fourniture de résultats intermédiaires, et une capacité d'exécution d'un modèle ML initial fourni par un consommateur (20, 30) ; et/ou
dans lequel des paramètres spécifiant la fourniture du modèle ML comprennent un ou plusieurs parmi une fenêtre temporelle pour des sorties intermédiaires ou finales, un niveau de précision qui peut être atteint par le modèle ML, une architecture d'apprentissage, une stratégie de sortie de résultats intermédiaires pendant un entraînement de modèle ML, des informations relatives à un fournisseur de modèle ML initial, une structure de modèle ML initial, une indication indiquant si l'apprentissage est en ligne ou hors ligne, et des informations relatives à une ou plusieurs sources de données.

12. Procédé (200) selon la revendication 10 ou 11, **caractérisé en outre par** :
le jugement d'artefacts partageables sur la base d'un ou plusieurs parmi un type de consommateur, un scénario d'application, une identification d'analyse, des informations du fournisseur de modèle initial, et une politique locale ;
la transmission, au consommateur de modèle ML (20, 30), d'informations relatives aux artefacts partageables.

13. Procédé (200) selon la revendication 12, dans lequel les paramètres spécifiant le service demandé lié à un modèle ML comprennent une architecture d'apprentissage qui est une architecture d'apprentissage automatique distribué/apprentissage fédéré, DML/FL, et **caractérisé en outre par** :
la découverte d'une ou plusieurs fonctions de réseau d'analyse de données client à utiliser dans un entraînement de modèle ML DML/FL ; et
la sélection d'une ou plusieurs fonctions de réseau d'analyse de données client découvertes.

14. Procédé (200) selon la revendication 13, **caractérisé en outre par** :
la fourniture, aux fonctions de réseau d'analyse de données client sélectionnées, de l'un parmi des paramètres DML/FL initiaux et une exigence de fenêtre temporelle pour un rapport de modèle local.

15. Procédé (200) selon la revendication 14, **caractérisé en outre par** :
la réception d'informations de modèle local depuis des fonctions de réseau d'analyse de données client ;
la réalisation d'une agrégation de modèle sur les informations de modèle local reçues ; et
le jugement de l'état d'entraînement.

16. Procédé (200) selon la revendication 15, **caractérisé en outre par** la mise à jour du consommateur de modèle ML (20, 30) en ce qui concerne l'état d'entraînement de modèle ML, dans lequel le procédé est en outre caractérisé facultativement par, après la mise à jour du consommateur de modèle ML en ce qui concerne l'état d'entraînement de modèle ML : {i} en réponse à une terminaison de la demande de service depuis le client de modèle ML :
la terminaison de l'entraînement de modèle ML ; et
la mise à jour de la fonction de réseau d'analyse de données client sélectionnée en ce qui concerne la terminaison d'entraînement de modèle ML ; ou
{ii} la réception, depuis le consommateur de modèle ML, de paramètres mis à jour en ce qui concerne le modèle ML ; et
en réponse aux paramètres mis à jour, la resélection de fonctions de réseau d'analyse de données client, et
facultativement, après la resélection de fonctions de réseau d'analyse de données client, la mise à jour d'une agrégation de modèle ML et d'une distribution d'informations de modèle ML agrégé aux fonctions de réseau d'analyse de données client.

17. Nœud de réseau (20, 40) mettant en œuvre une fonction de réseau d'analyse de données dans un réseau de communication sans fil, **caractérisé par** :
une circuiterie de communication (26) ; et
une circuiterie de traitement (22) connectée de manière fonctionnelle à la circuiterie de communication (26), la circuiterie de traitement (22) étant configurée pour :
recevoir (202), depuis un consommateur de modèle ML (20, 30), une demande de service liée à la fourniture d'un modèle ML, la demande incluant des paramètres spécifiant la fourniture du modèle ML ;
déterminer (204) un temps nécessaire pour fournir le service demandé ;
transmettre (206), au consommateur de modèle ML (20, 30), le temps déterminé.

18. Nœud de réseau (20, 40) selon la revendication 14, dans lequel la circuiterie de traitement est configurée pour réaliser le procédé selon l'une quelconque des revendications 10 à 16.
